# EUROPEAN PATENT APPLICATION

(11) **EP 1 835 327 A1**
(43) Date of publication of application: **19.09.2007**
(21) Application number: 07104081.0
(22) Date of filing: 14.03.2007
(51) Int. Cl.: G02C 5/22

(54) **Hinge, particularly for a frame for spectacles**

(30) Priority: 15.03.2006 IT UD20060066
(71) Applicant: Visottica Industrie S. P. A., 31058 Susegana TV (IT)
(72) Inventor: Bazzaco, Attilio, 31040, Pederobba (TV) (IT)
(74) Representative: Petraz, Gilberto Luigi

(57) **Abstract**

Hinge (10), particularly for a frame for spectacles (11) comprising a first part (12, 13) and a second part (13, 12). The hinge (10) connects in foldable manner the first part (12, 13) to the second part (13, 12), and comprises first constraining members made on the first part (12, 13) of the frame for spectacles (11), and second constraining members made on the second part (13, 12) of the frame for spectacles (11), and provided with a housing seating (16). The first constraining members comprise an elastic element (15, 115) inserted by elastic deformation into the housing seating (16) so as to be stably constrained inside it due to the return of the elastic deformation alone. Said elastic return applies a centrifugal force of an entity such as to attribute to said elastic element (15, 115) the function of a single pivoting element and to define the foldable connection between the first part (12, 13) and the second part (13, 12) of the frame for spectacles (11).

## Description

### FIELD OF THE INVENTION

The present invention concerns a hinge, particularly for the foldable connection between a pair of stems or sidepieces, and the lateral ends of a front-piece of a frame for spectacles. To be more exact, the hinge according to the present invention allows to ensure optimum control of the opening and closing movement of the sidepieces, and also to reduce the costs of producing, assembling and maintaining the frame.

### BACKGROUND OF THE INVENTION

Hinges used to join and move the sidepieces or stems with respect to the ends of a front-piece of a frame for spectacles are known.

Such hinges are normally made to allow an opening and closing movement of the sidepieces such as to define at least a position of non-use of the spectacles, in which the sidepieces are disposed substantially parallel to the front-piece, and a worn position of the spectacles, in which the sidepieces are disposed substantially perpendicular to the front-piece, and also to allow an opening of the sidepieces by more than 90°, so as to facilitate the wearing of the spectacles.

Hinges are known for the frames of spectacles, provided with at least a pivoting element, such as a pin or a screw, which is oriented substantially perpendicular to the longitudinal development of the relative sidepiece, and disposed through a corresponding seating of the sidepiece and a mating and coaxial seating made at a respective lateral end of the front-piece.

To be more exact, the seating for the sidepiece is defined by an eyelet or hook element made at the coupling end of the sidepiece, while the seating for the front-piece provides an inner compartment in which the eyelet or hook element is rotatably and coaxially housed, and a through notch which allows, during the assembly step, to insert the eyelet or hook element into the compartment, and hence to dispose the two housing seatings coaxially.

In known hinges, the inner compartment has a shape and size substantially equivalent to those of the eyelet or hook, and the through notch must obviously have an aperture at least equivalent to the outer diameter of the eyelet to allow it to be inserted; therefore, the duration of the coupling between the sidepiece and the front-piece is guaranteed only by the pivoting element, which is, however, thus subjected to shearing forces too.

Solutions are also known in which the through notch has a slightly smaller aperture than the outer diameter of the eyelet or hook of the sidepiece, and the eyelet or hook is slightly deformable to allow a reciprocal snap-in assembly.

This known solution does not autonomously guarantee the mechanical attachment of the two, and in any case a pivoting element is necessary to effect a secure foldable connection between the sidepiece and the front-piece.

If the pivoting element consists of a small screw screwed to the lower part of the seating made on the front-piece, it requires frequent adjustments to maintain the stability of the sidepiece-front-piece coupling, following possible wear of the relative contact surfaces, due to the prolonged use of the spectacles.

Since the cost of the hinges significantly affects the overall cost of the spectacles, producers in this field have been looking for ever simpler solutions which allow to contain said costs, but without obtaining satisfactory results. In almost all the solutions proposed, in fact, the presence of screws of very small size does not allow to reduce the costs concretely, particularly those costs deriving from the assembly times, since specific tools are required, and operations of extreme precision.

In other, more economical productions, the pivoting element comprises one or more expansion pins, inserted under pressure inside the corresponding through seatings of the sidepiece and the front-piece, to guarantee the foldable connection of the two. An example of this type of hinge is known from GB-A-773,298.

In these solutions, the disadvantage lies in the lack of effectiveness and reliability of the hinge produced which, after even a limited use, can become slack, losing its functionality or in certain cases, breaking.

It is also known from WO-A-2005/040892 a hinge in which the end of each sidepiece is coupled to a shoulder of the front piece by employing a resilient contraction between the two elements. In this solution, the resilient contraction of the sidepieces occurs in a direction which is parallel to the hinge axis.

One purpose of the present invention is therefore to achieve a hinge, particularly for the frames of spectacles, which is simple and economical to make, and which allows to associate the sidepieces to the front-piece of the frame for spectacles easily and quickly.

Another purpose of the present invention is to achieve a hinge for a frame of spectacles which is strong and resistant to the stresses and strains to which it is subjected during use.

The Applicant has devised, tested and embodied the present invention to overcome the shortcomings of the state of the art and to obtain these and other purposes and advantages.

### SUMMARY OF THE INVENTION

The present invention is set forth and characterized in the main claim, while the dependent claims describe other characteristics of the invention or variants to the main inventive idea.

In accordance with the above purposes, a hinge according to the present invention is used particularly for the foldable connection between a first part, for example a stem or sidepiece, and a second part, for example a front-piece, to support a pair of lenses of a frame for spectacles.

To be more exact, the hinge according to the present invention comprises first constraining means made on the first part of the frame for spectacles and provided with an elastic element, advantageously an eyelet, and second constraining means made on the second part of the frame for spectacles and provided with a mating housing seating. The elastic element is able to be inserted by elastic deformation into the housing seating, so as to be stably constrained inside it due to the return of the elastic deformation alone, which applies a centrifugal force of an entity such as to attribute to said elastic element the function of a single pivoting element to define the foldable connection between the first part and the second part of the frame for spectacles.

Within the framework of the present invention, by first part we mean the sidepiece and by the second part the front-piece or, by kinematic inversion, by first part we mean the front-piece and by the second part the sidepiece.

This advantageous solution also allows an extra travel in opening of the sidepieces with respect to the front-piece, facilitating the operations by a user to put on and take off the spectacles.

The elastic eyelet element normally has an outer diameter slightly greater than the inner diameter of the relative housing seating, so that, in the coupled condition of the two, the elastic element always remains elastically deformed.

According to the present invention, the elastic return of the elastic element is thus exploited, once disposed inside the housing seating, thus guaranteeing the mechanical hold of the coupling between the first and the second part of the frame, without needing any pivoting element extraneous to the parts of the frame, such as for example the screws and pins used in the state of the art. In fact, by constantly applying a radial thrust inside the housing seating, the elastic element also functions as a pivoting element for the system.

Moreover, the radial thrusts that the elastic element exerts inside the housing seating allow to recover possible rotational plays between the first and the second part of the frames for spectacles, which can be determined following possible wear caused by rubbing of the relative contact surfaces.

Another advantage of the solution according to the present invention is that the reciprocal assembly operations of the two parts simply occur due to the insertion of the elastic element inside the housing seating.

This operation can in fact be carried out manually without specific tools and precision operations, simply by applying a force so as to overcome the initial elasticity of the elastic element and to allow it to be inserted into the relative housing seating.

In a preferential form of embodiment of the present invention, the housing seating has an insertion hollow through which the elastic eyelet element is inserted by elastic deformation. The insertion hollow has an aperture advantageously smaller than the outer diameter of the elastic eyelet element, both to stimulate the elastic deformation thereof in insertion, and also to prevent the accidental emergence in the coupled condition with the housing seating.

According to another preferential form of embodiment, the elastic eyelet element is made by curling back on itself one end of the first or second part of the frame for spectacles.

### BRIEF DESCRIPTION OF THE DRAWINGS

These and other characteristics of the present invention will become apparent from the following description of some preferential forms of embodiment, given as a non-restrictive example with reference to the attached drawings wherein:
- fig. 1 shows a frame for spectacles provided with a hinge according to the present invention;
- fig. 2 shows an enlarged detail of fig. 1, in an exploded condition;
- fig. 3 shows an enlarged detail of fig. 1, in the assembled condition;
- fig. 4 shows a first variant of the hinge in fig. 1, in the assembled condition;
- fig. 5 shows a second variant of the hinge in fig. 1, in an exploded condition;
- fig. 6 shows a third variant of the hinge in fig. 1, in the assembled condition;
- fig. 7 shows a fourth variant of the hinge in fig. 1, in the assembled condition;
- fig. 8 shows a fifth variant of the hinge in fig. 1, in the assembled condition.

### DETAILED DESCRIPTION OF SOME PREFERENTIAL FORMS OF EMBODIMENT

With reference to the attached drawings, a hinge 10 according to the present invention is applied to a frame for spectacles 11 and is used to associate, allowing the rotation thereof, each stem or sidepiece 12 to a respective lateral part of the front-piece 13 that supports the lenses 17.

Preferably, the frame for spectacles 11 has sidepieces 12 and front-piece 13 made of metal profiles, but this does not constitute a limit to the application of the invention, which can also be used for frames for spectacles 11 of other types, and also made of different material, such as plastic, mixed plastic-metal materials or others, with good elastic characteristics.

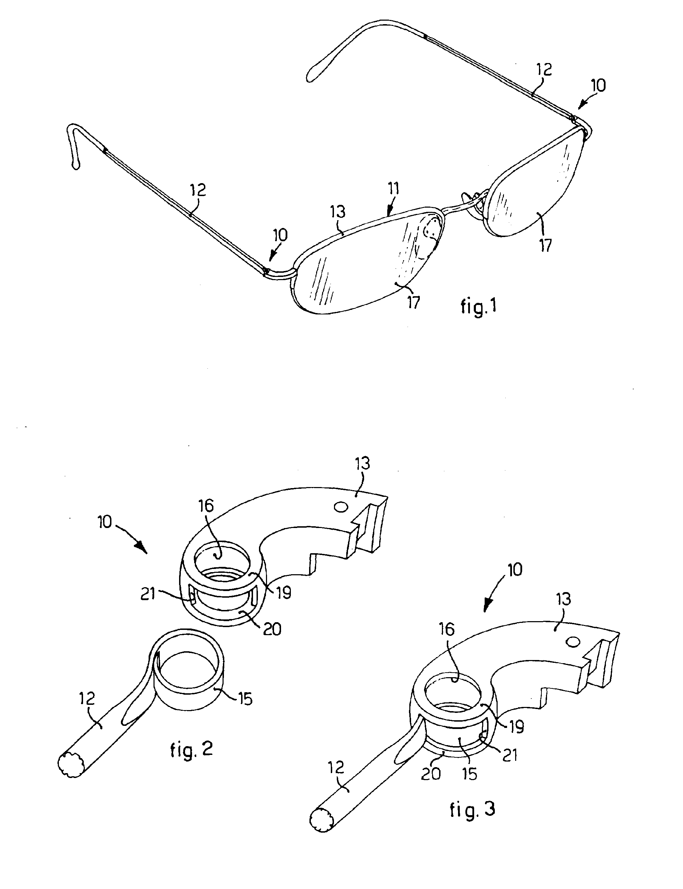

In the embodiment shown in figs. 1 to 5, each hinge 10 substantially comprises two constraint components, able to be rotatably coupled with each other: an elastic eyelet 15, made at one coupling end of the relative sidepiece 12; and a housing seating 16 made at a relative lateral part of the front-piece 13, and inside which the elastic eyelet 15 is elastically inserted.

The elastic eyelet 15 is simply made by curling the coupling end of the sidepiece 12, it is substantially closed and has an outer diameter slightly greater than the inner diameter of the housing seating 16. Thanks to its greater diameter, in the coupled condition of the two, obtained by forcefully inserting the elastic eyelet 15, in the condition of use, the latter constantly exerts a centrifugal radial thrust on the inner walls of the housing seating 16, due to the effect of the release of the deformation imparted at the act of insertion, remaining mechanically inside the housing seating 16, functioning as a pivoting element, and also compensating for possible slackening due to wear caused by the rubbing of the contact walls.

The housing seating 16 is substantially annular in shape, has an inner diameter which, as we said, is substantially less than the outer diameter of the elastic eyelet 15, and is defined at the upper part by an upper abutment 19 and at the lower part by a lower abutment 20.

The minimum distance between the upper abutment 19 and the lower abutment 20 is substantially equivalent to the height of the elastic eyelet 15, so as to prevent uncontrolled oscillations of the sidepiece 12, other than the desired rotational movement with respect to the front-piece 13.

Advantageously, the ratio between the inner diameter and height of the housing seating 16 is more than about 2, with coupling tolerances varying from about 0.1 to about 0.001 mm.

The housing seating 16 is open towards the relative sidepiece 12 through an insertion hollow 21, which has an aperture of an amplitude less than the outer diameter of the elastic eyelet 15, so as to stimulate the elastic deformation of the latter during the insertion steps, and to contrast the accidental emergence thereof once it is housed in the housing seating 16.

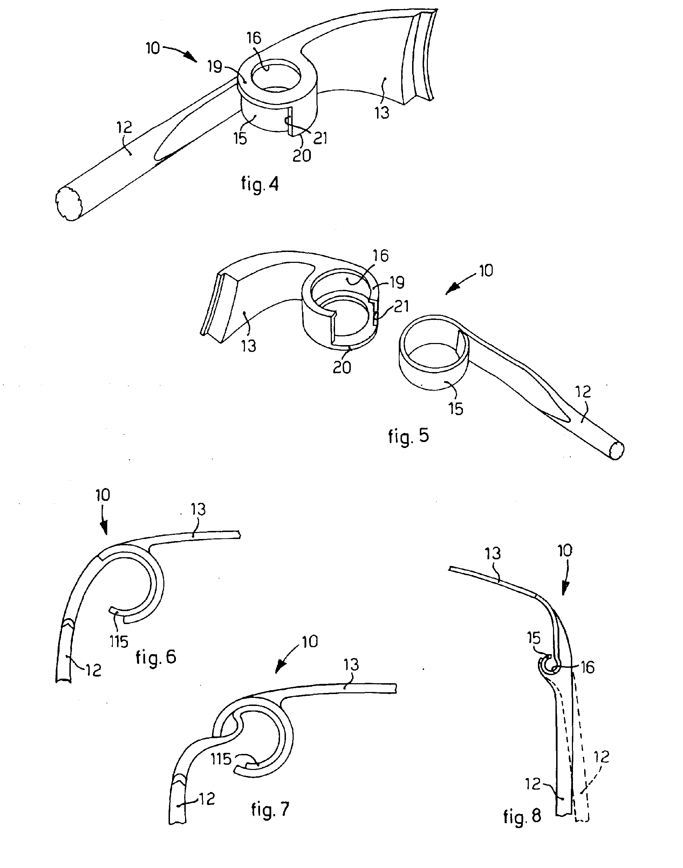

In the form of embodiment shown in fig. 4, while the upper abutment 19 follows annularly the whole profile of the housing seating 16, the lower abutment 20 is open in correspondence with the insertion hollow 21, so as to further facilitate the operations of inserting the elastic eyelet 15 into the relative housing seating 16.

In the variant shown in fig. 5, inversely to what is shown in fig. 4, while the lower abutment 20 follows annularly the whole profile of the housing seating 16, the upper abutment 19 is open in correspondence with the insertion hollow 21.

In the solutions shown in figs. 6 and 7, the closed elastic eyelet 15 as described heretofore is replaced by an elastic semi-eyelet 115 made by bending the end of the relative sidepiece 12, and having the same elastic and pivoting functions as the whole one previously described.

In the embodiment shown in fig. 8, the hinge 10 according to the present invention is applied in a kinematically opposite manner with respect to what has been described heretofore, although it remains true that the elastic eyelet 15, which in this case is made by curling a lateral part of the front-piece 13, is inserted coaxially and rotatably by elastic deformation inside the relative housing seating 16 made in this case at the end of the sidepiece 12.

In this case too, the elastic eyelet 15 is stably constrained to the housing seating 16, applying radially a centrifugal elastic pressure such as to function as a pivoting element and to define the foldable connection between the sidepiece 12 and the front-piece 13 of the frame for spectacles 11.

To be more exact, this solution allows an extra travel in opening, shown by a line of dashes, of the sidepieces 12 with respect to the front-piece 13, facilitating the operations by a user to put on and take off the spectacles.

It is clear, however, that modifications and/or additions of parts may be made to the hinge 10 as described heretofore, without departing from the scope of the present invention.

It is also clear that, although the present invention has been described with reference to specific examples, a person of skill in the art shall certainly be able to achieve many other equivalent forms of hinge, having the characteristics as set forth in the claims and hence all coming within the scope of protection defined thereby.

## Claims

1. Hinge, particularly for a frame for spectacles (11) comprising at least a first part (12, 13) and a second part (13, 12), said hinge being able to connect in foldable manner said first part (12, 13) to said second part (13, 12), and comprising first constraining means made on said first part (12, 13) of said frame for spectacles (11), and second constraining means made on said second part (13, 12) of said frame for spectacles (11), and provided with at least a housing seating (16), **characterized in that** said first constraining means comprises an elastic element (15, 115) able to be inserted by elastic deformation into said housing seating (16) and having an outer size greater than the inner size of said housing seating (16), so as to be stably constrained inside it due to the return of the elastic deformation alone, which applies a centrifugal force of an entity such as to attribute to said elastic element (15, 115) the function of a single pivoting element and to define the foldable connection between said first part (12, 13) and said second part (13, 12) of said frame for spectacles (11).

2. Hinge as in claim 1, wherein said first part comprises a pair of sidepieces (12) and said second part comprises a front-piece (13) to which said sidepieces (12) are connected, **characterized in that** said elastic element (15, 115) is made at one end of each of said sidepieces (12), and **in that** a pair of said housing seatings (16) are made on opposite lateral sides of said front-piece (13).

3. Hinge as in claim 1, wherein said first part comprises a front-piece (13) and said second part comprises a pair of sidepieces (12) which are connected on opposite sides to said front-piece (13), **characterized in that** a pair of said elastic elements (15, 115) are made on opposite lateral sides of said front-piece (13), and **in that** said housing seating (16) is made at one end of each of said sidepieces (12).

4. Hinge as in any claim hereinbefore, **characterized in that** said housing seating (16) has an insertion hollow (21) through which said elastic element (15, 115) is inserted by elastic deformation.

5. Hinge as in claim 4, **characterized in that** said insertion hollow (21) has a smaller aperture than the outer sizes of said elastic element (15, 115).

6. Hinge as in any claim hereinbefore, **characterized in that** said elastic element comprises an eyelet (15) made by curling on itself one end of said first (12, 13) or said second (13, 12) part of said frame for spectacles (11).

7. Hinge as in any claim from 1 to 5, **characterized in that** said elastic element comprises a semi-eyelet (115) made by bending one end of said first (12, 13) or said second (13, 12) part of said frame for spectacles (11).

8. Hinge as in any claim hereinbefore, **characterized in that** said housing seating (16) is substantially annular in shape, and is defined at the upper part by an upper abutment (19) and at the lower part by a lower abutment (20).

9. Hinge as in claim 8, **characterized in that** the minimum distance between said upper abutment (19) and said lower abutment (20) is substantially equivalent to the height of said elastic element (15).

10. Hinge as in claim 8 or 9, **characterized in that** the ratio between the inner diameter and the height of said housing seating (16) is more than about 2.

11. Hinge as in any claim from 8 to 10, **characterized in that** said upper abutment (19) and said lower abutment (20) both have an annular shape and entirely follow the circular profile of said housing seating (16).

12. Hinge as in any claim from 8 to 10, **characterized in that** said upper abutment (19) follows annularly the whole circular profile of said housing seating (16), while said lower abutment (20) is open in a segment in order to further facilitate the operations to elastically insert said elastic element (15) into said housing seating (16).

13. Hinge as in any claim from 8 to 10, **characterized in that** said lower abutment (20) follows annularly the whole circular profile of said housing seating (16), while said upper abutment (19) is open in a segment in order to further facilitate the operations to elastically insert said elastic element (15) into said housing seating (16).
